# EUROPEAN PATENT SPECIFICATION

(11) **EP 4 351 767 B1**
(45) Date of publication and mention of the grant of the patent: **14.05.2025**
(21) Application number: 22731660.1
(22) Date of filing: 03.06.2022
(51) Int. Cl.: B01F 23/213, B01F 25/313

(54) **AMMONIA MIXING SYSTEM AND USE THEREOF**
AMMONIAKMISCHSYSTEM UND DEREN VERWENDUNG
SYSTÈME DE MÉLANGE D'AMMONIAC ET SON UTILISATION

(30) Priority: 11.06.2021 EP 21178937
(43) Date of publication of application: 17.04.2024
(73) Proprietor: CASALE SA, 6900 Lugano (CH)
(72) Inventor: BERETTI, Andrea, 22069 Rovellasca (CO) (IT); CEREA, Iacopo, 6900 Lugano (CH)
(74) Representative: M. Zardi & Co S.A.
(86) International application number: PCT/EP2022/065186
(87) International publication number: WO 2022/258519

(56) References cited:
- EP-A1- 3 623 594
- US-B1- 10 456 711

## Description

### Field of application

The invention is in the field of mixing devices configured to inject a fluid or a gas into a main flow of another stream. Specifically, the invention pertains to a mixing device comprising a distribution channel, an injection system, and at least one static mixing unit arranged downstream of the injection system.

### Prior art

Conventional mixing system arranged in conducts or channels typically comprises an injection unit, and optionally a static mixer arranged downstream.

Usually, the injection unit comprises a cylindrical bore manifold configured to feed a fluid or a gas into a mainstream whilst the static mixer comprises a plurality of channel to promote the mixing between the injected fluid and the mainstream leading to a high mixing efficiency.

Unfortunately, conventional mixing devices cannot achieve a high mixing efficiency in a wide range of flow rate injected. Specifically, when the volume of the injected fluid is order of magnitude different from the volume of the mainstream, a low mixing efficiency may occur. Consequently, to achieve a satisfactory mixing efficiency and a homogenous mixture, the mixing system must be contained in a very long channels or conduits.

Mixing devices are typically present in all the apparatus requiring the mixing between multiple streams for example in combustion units and in catalytic converters.

In the catalytic converters a high degree of homogeneity between the mixed streams is necessary to avoid a poor production yield and an uneven temperature distribution across the catalytic bed that may result in a partial loss of the catalyst.

This need is particularly felt in the ammonia converter exploited for the catalytic oxidation of ammonia in nitric acid synthesis plants. In more details, in such plants, catalytic oxidation of ammonia is carried out in a converter in the presence of air to yield a nitrogen oxide NO gas mixture according to the following chemical equilibrium:

4*NH₃ +* 5*O*₂ *↔* 4*NO* + 6*H*₂

The reaction is highly exothermic and it requires to mix ammonia and air in a ratio of about 1:10. The reaction is carried out in the presence of catalyst gauzes made of 90% platinum, with possible addition of rhodium for better mechanical resistance and palladium.

Besides from this main reaction, nitrogen and nitrous oxide (N₂O) can also be produced, especially when the mix between ammonia and air is not homogeneous. A poor-quality mixing between two regents typically results in high by-products formation and in a poor reaction yield. Additionally, a local excess of unreacted ammonia in the converter may introduce a risk for the plant safety.

A not homogenous mixing between said reagents may further result in an uneven temperature distribution across the catalytic gauzes that may result in uneven wearing of the catalytic gauzes leading to a loss of catalyst and to a low conversion rate and possibly to a high ammonia slip.

Therefore, it is evident how import is to establish homogenous mixing conditions between ammonia and air before reaching the catalytic bed.

Therefore, in light of the consideration state above, it is particularly desirable to provide a mixing device that can guarantee a high mixing efficiency over a short length of the distribution channel and over a wide range of flow rate injected by the mixing device.

Additionally, the devices should be subjected to only a small pressure drop and should allow to obtain a high degree of homogeneity so that the oxidation reaction between the reagents can occur avoiding or limiting the formations of by-products.

Document US 10 456 711 B1 discloses a mixing system in accordance with the preamble of claim 1.

### Summary of the invention

The invention aims to overcome the above drawbacks of the prior art. One aspect of the present invention is to provide a mixing system according to the claims.

The mixing system is configured to mix a fluid or a gas into a mainstream, the mixing system comprises a distribution channel, an injection unit and a static mixing unit.

The distribution channel has a main longitudinal axis which, in operation, determines the flow direction of the mainstream and the injection unit comprises a manifold and a plurality of injection tubes.

The manifold is arranged inside the distribution channel and is disposed perpendicularly to the main longitudinal axis of said distribution channel. The manifold is adapted to receive said fluid or gas to be injected into the mainstream via the injection tubes.

The injection tubes extend perpendicularly from said manifold and are disposed lengthwise forming at least one row along the length of said manifold, additionally the injection tubes are parallel to each other and are arranged so that for each row of tubes, each pair of consecutive tubes is made of two tubes of different length.

Each injection tube is provided with an aperture configured to eject said fluid or gas with a flow direction perpendicular to the main longitudinal axis of the distribution channel.

A second aspect of the present invention is to use the mixing system of the invention in an ammonia converter that is configured to catalytically oxidise ammonia in presence of air wherein the ammonia converter is part of a nitric acid synthesis plant.

Another aspect of the present invention is to use the mixing system of the invention in a NOx removal system comprising a deNOx reactor. The fluid or gas injected via the injection tubes is an ammonia stream whilst the mainstream is a gas stream retaining NOx.

An interesting application of the present invention concerns the injection of ammonia into an air stream. It has been found that by injecting ammonia perpendicularly or approximately perpendicularly to the flow direction of the air stream crossing the distribution conduit, a homogeneous mixture between the reagents can be established in a very short length of the conduit consequentially temperature gradients over the catalytic gauges in an ammonia converter are avoided, and uneven wearing of the catalyst is prevented.

Even more advantageously, while the conventional mixing devices were prone to ammonia slip, thanks to this improved configuration, the presence of unreacted ammonia downstream of the catalytic bed is avoided, and the plant efficiency is increased.

Even more advantageously, the system requires low investment cost and due to the reduced length of the injection tubes, materials can be saved for the manufacturing of the tubes and ideal mixing conditions can be established within a low-pressure drop.

A further advantage of the present invention is that the mixing system can be used in nitric acid plant to mix ammonia and a tail gas in a ratio of 1: 100 for the catalytic reduction of NOx as part of tail gas treatment so to obtain high catalytic reduction efficiency.

### Preferred embodiments

Preferably, the manifold of the injection system is connected to an ammonia feed and the distribution conduct is in connected to an air supply unit. Accordingly, the fluid or gas injected into the mainstream is an ammonia feed whilst the latter is an air stream. The ammonia stream may react with the oxygen retained in the airstream to yield a nitrogen oxide gas mixture over a Pt catalyst.

According to a particularly preferred embodiment of the present invention, the mixing system comprises two rows of injection tubes that are arranged on the opposite sides of the manifold.

Preferably the static mixing unit is of a conventional design comprising a plurality of walls defining a plurality of channels eventually oriented at an angle to the axis of flow of the mainstream crossing the conduct longitudinally. The skilled person in the art is well aware of how to orient or arrange said wall to achieve a homogenous mixture between the reagent streams.

According to another embodiment of the present invention, the mixing distribution device may comprise a plurality of static mixing units arranged in series so that the mixture obtained from the mixing of the injected stream and the mainstream crosses in sequence a plurality of static mixing units before being fed to the catalytic bed. Preferably the number of static mixing units included in the mixing device is comprised between 1 and 3.

According to a particularly preferred embodiment of the present invention, the manifold is cylindrically shaped having a plurality of injection tube disposed lengthwise over the surface of the manifold. Preferably the injecting tubes are cylindrically shaped.

According to the invention, the injecting tubes are parallel to each other and the distance between the adjacent tubes may be varied based on the operating parameters of the converter, the injection penetration of the stream discharged from the injection tubes, the location of the static mixing unit and the arrangement of the catalytic bed arranged in the catalytic converter.

Additionally, the number of provided branched injection tubes may be optimised in order to reach a target pressure drop into the system so to establish optimal mixing conditions. Preferably the number of injecting tubes is comprised between 6 and 24, more preferably between 10 and 18.

According to an embodiment of the present invention, the injection tubes may further comprise a plurality of metering openings. The metering opening may be formed as cylindrical bores in the wall of the injecting tube or as outlet pipes. This embodiment is particularly interesting, especially when the flow velocity of the inject stream and the flow velocity of the mainstream are low, for example, characterised by a low Reynolds number and laminar flow behaviour.

Preferably, the cross-sectional area of said manifold is at least twice as great as the sum of the cross-section area of the injecting tubes. So that when the gas or fluid crosses the injecting tubes an acceleration of flow occurs so as to increase the turbulence and therefore promoting the mixing.

### Figures

Fig.1 shows the mixing system of the invention according to an embodiment of the invention.
Fig. 2 shows a cross-sectional view of the injecting unit.
Fig. 3 show a perspective view of the injecting tubes according to an embodiment of the invention.

### Description of the figures

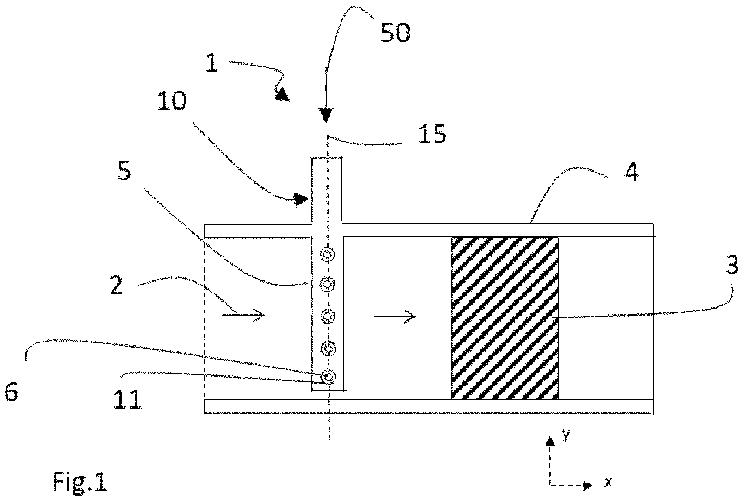

Fig. 1 shows a mixing device according to an embodiment of the invention.

The mixing system comprises a circular distribution channel or a circular distribution conduit 4 and an injection unit 10 and a static mixing unit 3.

The injection unit 10 comprises a manifold 5 and a plurality of injection tubes 11. The manifold 5 is disposed perpendicularly inside the distribution channel 4 along the y-plane 15 occupying therefore a radial cross-section of the conduct 4.

The manifold is adapted to receive the ammonia feed 50 to be injected into the airstream 2 via the injection tubes 11.

The injection tubes 11 extend perpendicularly from said manifold 5 and are disposed lengthwise along the manifold. The injecting tube are parallel between each other and are arranged so that each injecting tube is followed and/or preceded by an adjacent injecting tube that is shorter or longer in length.

From Fig. 1 it can be appreciated that the main airstream crosses the distribution channel 4 parallel to the longitudinal direction of the circular conduct wherein said direction is indicated by the x-axis represented in figure. It can be appreciated that each injection tubes 11 is provided with an aperture 6 configured to discharge the ammonia feed 50 having a perpendicular direction to the flow direction of the airstream 2.

Advantageously, due to this injection configuration, a homogenous mixing between the two streams is established. In a different embodiment, a homogeneous mixture between the two streams can be obtained without requiring the addition of the static mixing unit therefore, no static mixing unit is arranged downstream of the injection unit 10.

The static mixing unit 3 is of a conventional design comprising a plurality of walls that define a plurality of channels eventually disposed at an angle to the axis of flow (x-axis) of the main steam crossing the conduct.

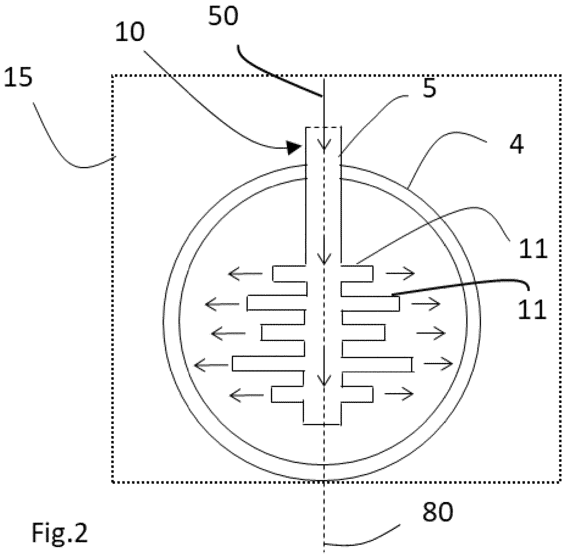

Fig. 2 illustrates a cross-sectional view of the injecting unit 10. From the figure, it can be appreciated that each injecting tube is followed or preceded by a tube having a shorter or a longer length. The length of the tube is defined as the absolute extension value of the injecting tube measured along the y-plane 15, the origin of the measurement is carried out from the annular wall of the manifold.

In Fig. 2 it can be appreciated the manifold is symmetrical with respect to the z-axis 80 and the injecting tubes 11 are arranged on two opposite side of the manifold 5.

The injecting tubes are disposed lengthwise along the length of the manifold and are spaced at a uniform distance between one another. The distance between the adjacent injecting tube can be optimised depending on the converter's operating conditions.

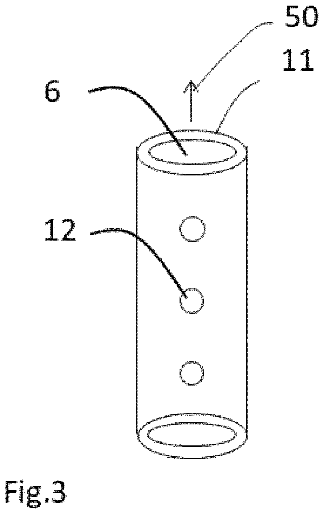

Fig.3 illustrates a perspective view of an injecting tube according to an embodiment of the invention. The injecting tube is cylindrically shaped and is defined by an annular wall. The injecting tube terminates with an aperture 6 for the discharge of the ammonia feed into the main airstream that crosses the distribution conduit.

The injecting tube further comprises a plurality of metering openings 12 disposed lengthwise along the length of the annual wall. The diameter of each opening 12 is optimized according to the converter's operating conditions and typically is not greater than half of that of the main aperture.

The structural features of the metering openings described in this particular embodiment enable a uniform injection of the ammonia feed through the volume of the airstream. This configuration design is particularly advantageous when the flow rate of the injection fluid is particularly low for example characterised by a low Reynolds number and by a laminar flow behaviour.

The number of metering can be optimised during the design stage depending on the operating parameter of the convert and depending on the maximum pressure drop achievable across the mixing device.

## Claims

1. Mixing system (1) configured to mix a fluid or a gas (50) into a mainstream (2), the mixing system comprises:
• a distribution channel (4)
• an injection unit (10)
• a static mixing unit (3)
wherein:
the distribution channel has a main longitudinal axis which, in operation, determines the flow direction of the mainstream (2);
the injection unit (10) comprises a manifold (5) and a plurality of injection tubes (11);
the manifold (5) is arranged inside the distribution channel (4) and is disposed perpendicularly to the main longitudinal axis of said distribution channel, said manifold is adapted to receive said fluid or gas (50) to be injected into the mainstream (2) via the injection tubes (11);
the injection tubes (11) extend perpendicularly from said manifold (5) and are disposed lengthwise forming at least one row along the length of said manifold (5);
the injection tubes (11) are parallel to each other and are arranged so that for each row of tubes, each pair of consecutive tubes is made of two tubes of different length;
**characterized in that**
each injection tube (11) is provided with an aperture (6) configured to eject said fluid or gas (50) with a flow direction perpendicular to the main longitudinal axis of the distribution channel (4).

2. Mixing system according to claim 1, wherein said manifold is connected to an ammonia feed and the distribution conduct is connected to an air supply unit so that said fluid or gas (50) is an ammonia feed whilst said mainstream (2) is an air stream.

3. Mixing system according to any one of the previous claims, wherein the number of rows is two and wherein the said two rows are arranged on the opposite sides of the manifold.

4. Mixing system according to any one of the previous claims, wherein the number of injecting tubes (11) is between 6 and 24, preferably between 10 and 18.

5. Mixing system according to any one of the previous claims, wherein the injection tubes (11) further comprise a plurality of metering openings (12) disposed lengthwise along the length of the injecting tubes (11).

6. Mixing system according to claim 5, wherein the metering openings are obtained as a cylindrical bore in the wall of the injecting tubes (11) or as outlet pipe.

7. Mixing system according to any one of the previous claims, wherein the cross-sectional area of said manifold (5) is at least twice as great as the sum of the cross-section area of all the injecting tubes (11).

8. Use of the mixing system of any one of the previous claims in an ammonia converter, wherein the ammonia converter is configured to catalytically oxidise ammonia in presence of air and wherein the ammonia converter is part of a nitric acid synthesis plant.

9. Use of the mixing system of any one of the claims 1 to 7 in a NOx removal system comprising a deNOx reactor and wherein the fluid or gas (50) injected via the injection tubes is an ammonia stream whilst the mainstream (2) is a gas stream retaining NOx.

## Patentansprüche

1. Mischsystem (1), das konfiguriert ist, um ein Fluid oder ein Gas (50) in einen Hauptstrom (2) einzumischen, wobei das Mischsystem umfasst:
• einen Verteilungskanal (4)
• eine Einspritzeinheit (10)
• eine statische Mischeinheit (3)
wobei:
der Verteilungskanal eine Hauptlängsachse aufweist, die im Betrieb die Fließrichtung des Hauptstroms (2) bestimmt;
die Einspritzeinheit (10) einen Verteiler (5) und eine Vielzahl von Einspritzrohren (11) umfasst;
der Verteiler (5) innerhalb des Verteilungskanals (4) positioniert und senkrecht zu der Hauptlängsachse des Verteilungskanals angeordnet ist, wobei der Verteiler geeignet ist, um das Fluid oder das Gas (50) aufzunehmen, das über die Einspritzrohre (11) in den Hauptstrom (2) eingespritzt werden soll;
die Einspritzrohre (11) sich senkrecht aus dem Verteiler (5) erstrecken und in Längsrichtung angeordnet sind, wobei sie mindestens eine Reihe entlang der Länge des Verteilers (5) ausbilden;
die Einspritzrohre (11) parallel zueinander verlaufen und so positioniert sind, dass für jede Rohrreihe jedes Paar aufeinanderfolgender Rohre aus zwei Rohren unterschiedlicher Länge besteht;
**dadurch gekennzeichnet, dass**
jedes Einspritzrohr (11) mit einer Öffnung (6) bereitgestellt ist, die konfiguriert ist, um das Fluid oder das Gas (50) mit einer Fließrichtung senkrecht zu der Hauptlängsachse des Verteilungskanals (4) auszustoßen.

2. Mischsystem nach Anspruch 1, wobei der Verteiler mit einer Ammoniakzufuhr verbunden ist und die Verteilungsleitung mit einer Luftversorgungseinheit verbunden ist, so dass das Fluid oder das Gas (50) eine Ammoniakzufuhr ist, während der Hauptstrom (2) ein Luftstrom ist.

3. Mischsystem nach einem der vorstehenden Ansprüche, wobei die Anzahl der Reihen zwei beträgt und wobei die zwei Reihen auf gegenüberliegenden Seiten des Verteilers positioniert sind.

4. Mischsystem nach einem der vorstehenden Ansprüche, wobei die Anzahl der Einspritzrohre (11) zwischen 6 und 24, vorzugsweise zwischen 10 und 18 liegt.

5. Mischsystem nach einem der vorstehenden Ansprüche, wobei die Einspritzrohre (11) ferner eine Vielzahl von Dosieröffnungen (12) umfassen, die in Längsrichtung entlang der Länge der Einspritzrohre (11) angeordnet sind.

6. Mischsystem nach Anspruch 5, wobei die Dosieröffnungen als zylindrische Bohrung in der Wand der Einspritzrohre (11) oder als Auslassröhre ausgeführt sind.

7. Mischsystem nach einem der vorstehenden Ansprüche, wobei die Querschnittsfläche des Verteilers (5) mindestens doppelt so groß wie die Summe der Querschnittsfläche aller Einspritzrohre (11) ist.

8. Verwendung des Mischsystems nach einem der vorstehenden Ansprüche in einem Ammoniakkonverter, wobei der Ammoniakkonverter konfiguriert ist, um Ammoniak in Gegenwart von Luft katalytisch zu oxidieren, und wobei der Ammoniakkonverter Teil einer Anlage für Salpetersäuresynthese ist.

9. Verwendung des Mischsystems nach einem der Ansprüche 1 bis 7 in einem NOx-Entfernungssystem, umfassend einen DeNOx-Reaktor, und wobei das über die Einspritzrohre eingespritzte Fluid oder Gas (50) ein Ammoniakstrom ist, während der Hauptstrom (2) ein NOx zurückhaltender Gasstrom ist.

## Revendications

1. Système de mélange (1) configuré pour mélanger un fluide ou un gaz (50) dans un courant principal (2), le système de mélange comprend :
• un canal de distribution (4)
• une unité d'injection (10)
• une unité de mélange statique (3)
dans lequel :
le canal de distribution possède un axe longitudinal principal qui, en fonctionnement, détermine le sens d'écoulement du courant principal (2) ;
l'unité d'injection (10) comprend un collecteur (5) et une pluralité de tubes d'injection (11) ;
le collecteur (5) est agencé à l'intérieur du canal de distribution (4) et est disposé perpendiculairement à l'axe longitudinal principal dudit canal de distribution, ledit collecteur est adapté pour recevoir ledit fluide ou gaz (50) devant être injecté dans le courant principal (2) via les tubes d'injection (11) ;
les tubes d'injection (11) s'étendent perpendiculairement à partir dudit collecteur (5) et sont disposés longitudinalement en formant au moins une rangée le long de la longueur dudit collecteur (5) ;
les tubes d'injection (11) sont parallèles les uns aux autres et sont agencés de sorte que, pour chaque rangée de tubes, chaque paire de tubes consécutifs soit constituée de deux tubes de longueur différente ;
**caractérisé en ce que**
chaque tube d'injection (11) est muni d'une ouverture (6) configurée pour éjecter ledit fluide ou gaz (50) avec un sens d'écoulement perpendiculaire à l'axe longitudinal principal du canal de distribution (4).

2. Système de mélange selon la revendication **1,** dans lequel ledit collecteur est raccordé à une source d'ammoniac et le conduit de distribution est raccordé à une unité d'alimentation en air de sorte que ledit fluide ou gaz (50) soit une source d'ammoniac tandis que ledit courant principal (2) est un courant d'air.

3. Système de mélange selon l'une quelconque des revendications précédentes, dans lequel le nombre de rangées est de deux et dans lequel lesdites deux rangées sont agencées sur les côtés opposés du collecteur.

4. Système de mélange selon l'une quelconque des revendications précédentes, dans lequel le nombre de tubes d'injection (11) est entre 6 et 24, de préférence entre 10 et 18.

5. Système de mélange selon l'une quelconque des revendications précédentes, dans lequel les tubes d'injection (11) comprennent en outre une pluralité d'ouvertures de dosage (12) disposées longitudinalement le long de la longueur des tubes d'injection (11).

6. Système de mélange selon la revendication 5, dans lequel les ouvertures de dosage sont obtenues sous la forme d'un alésage cylindrique dans la paroi des tubes d'injection (11) ou sous la forme d'une canalisation de sortie.

7. Système de mélange selon l'une quelconque des revendications précédentes, dans lequel l'aire de section transversale dudit collecteur (5) est au moins deux fois plus importante que la somme de l'aire de section transversale de tous les tubes d'injection (11).

8. Utilisation du système de mélange selon l'une quelconque des revendications précédentes dans un convertisseur d'ammoniac, dans lequel le convertisseur d'ammoniac est configuré pour oxyder de manière catalytique de l'ammoniac en présence d'air et dans lequel le convertisseur d'ammoniac fait partie d'une installation de synthèse d'acide nitrique.

9. Utilisation du système de mélange selon l'une quelconque des revendications 1 à 7 dans un système d'élimination des NOx comprenant un réacteur déNOx et dans lequel le fluide ou gaz (50) injecté via les tubes d'injection est un courant d'ammoniac tandis que le courant principal (2) est un courant de gaz retenant les NOx.
